# EUROPEAN PATENT APPLICATION

(11) **EP 4 745 545 A1**
(43) Date of publication of application: **20.05.2026**
(21) Application number: 25187078.8
(22) Date of filing: 02.07.2025
(51) Int. Cl.: G01L 1/00, G01C 19/5726, G01M 5/00, G01C 19/5776, G01C 25/00

(54) **SENSOR AND ELECTRONIC DEVICE**

(30) Priority: 15.11.2024 JP 2024199944
(71) Applicant: Kabushiki Kaisha Toshiba, Tokyo 105-0023 (JP)
(72) Inventor: MURASE, Hideaki, Tokyo (JP); ONO, Daiki, Tokyo (JP); MIYAZAKI, Fumito, Tokyo (JP); TOMIZAWA, Yasushi, Tokyo (JP)
(74) Representative: Marks & Clerk LLP

(57) **Abstract**

According to one embodiment, a sensor includes an element section and a controller. The element section includes a base including a base face, a fixed portion fixed to the base face, a movable portion supported by the fixed portion, a gap being provided between the base face and the movable portion, first and second driving electrodes, and a first to fourth electrodes The controller is configured to perform a first operation and a detection operation. The first operation includes a vibration operation and a voltage setting operation. In the detection operation, the controller is configured to detect an external force applied to the element section using the first voltage, the second voltage, the third voltage, and the fourth voltage set in the voltage setting operation.

## Description

### CROSS-REFERENCE TO RELATED APPLICATIONS

This application is based upon and claims the benefit of priority from Japanese Patent Application No.2024-199944, filed on November 15, 2024.

### FIELD

Embodiments described herein relate generally to a sensor and an electronic device.

### BACKGROUND

For example, there is a sensor using a micro electro mechanical system (MEMS) element, etc. In the sensor, improvement of accuracy is desired.

### BRIEF DESCRIPTION OF THE DRAWINGS

FIG. 1 is a schematic diagram illustrating a sensor according to a first embodiment;
FIGS. 2A and 2B are schematic views illustrating a part of the sensor according to the first embodiment;
FIG. 3 is a schematic diagram illustrating the operation of the sensor in the first embodiment;
FIG. 4 is a schematic diagram illustrating an electronic device according to a second embodiment;
FIGS. 5A to 5G are schematic diagrams illustrating applications of the electronic device according to the embodiment; and
FIGS. 6A and 6B are schematic diagrams illustrating applications of the sensor according to the embodiment.

### DETAILED DESCRIPTION

According to one embodiment, a sensor includes an element section and a controller. The element section includes a base including a base face, a fixed portion fixed to the base face, a movable portion supported by the fixed portion, a gap being provided between the base face and the movable portion, a first driving electrode fixed to the base face and facing the movable portion, a second driving electrode fixed to the base face and facing the movable portion, a first electrode fixed to the base face and facing the movable portion, a second electrode fixed to the base face and facing the movable portion, a third electrode fixed to the base face and facing the movable portion, and a fourth electrode fixed to the base face and facing the movable portion. A first driving direction from the fixed portion to the first driving electrode is along the base face. A second driving direction from the fixed portion to the second driving electrode is along the base face and crosses the first driving direction. A first electrode direction from the fixed portion to the first electrode is along the base face. A second electrode direction from the fixed portion to the second electrode is along the base face and crosses the first electrode direction. A third electrode direction from the fixed portion to the third electrode is along the base face and crosses the first electrode direction. A fourth electrode direction from the fixed portion to the fourth electrode is along the base face and crosses the first electrode direction and the third electrode direction. The controller is configured to perform a first operation and a detection operation. The first operation includes a vibration operation and a voltage setting operation. In the vibration operation, the controller is configured to apply a first drive voltage between the movable portion and the first driving electrode and to apply a second drive voltage between the movable portion and the second driving electrode to vibrate the movable portion along the base face, and to discretely change at least one of the first drive voltage or the second drive voltage. In the voltage setting operation, the controller is configured to change at least one of a first voltage between the movable portion and the first electrode, a second voltage between the movable portion and the second electrode, a third voltage between the movable portion and the third electrode, or a fourth voltage between the movable portion and the fourth electrode based on a vibration state of the movable portion in the vibration operation. In the detection operation, the controller is configured to detect an external force applied to the element section using the first voltage, the second voltage, the third voltage, and the fourth voltage set in the voltage setting operation.

Various embodiments are described below with reference to the accompanying drawings.

The drawings are schematic and conceptual; and the relationships between the thickness and width of portions, the proportions of sizes among portions, etc., are not necessarily the same as the actual values. The dimensions and proportions may be illustrated differently among drawings, even for identical portions.

In the specification and drawings, components similar to those described previously or illustrated in an antecedent drawing are marked with like reference numerals, and a detailed description is omitted as appropriate.

### (First Embodiment)

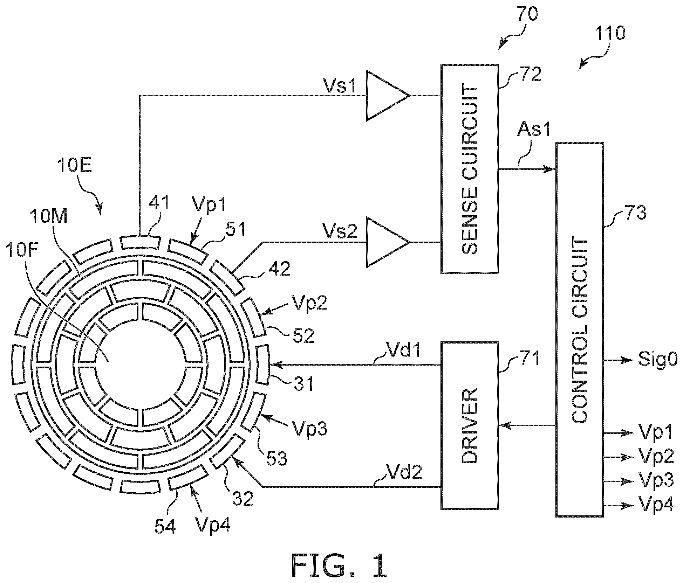

FIG. 1 is a schematic diagram illustrating a sensor according to the first embodiment.

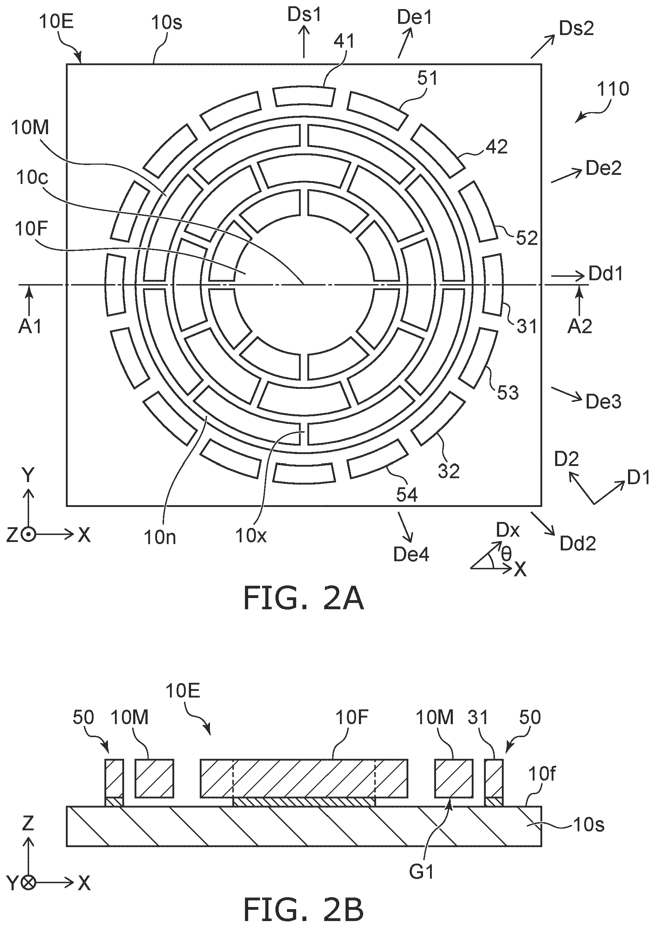

FIGS. 2A and 2B are schematic views illustrating a part of the sensor according to the first embodiment.

FIG. 2A is a plan view. FIG. 2B is a cross-sectional view taken along the line A1-A2 in FIG. 2A.

As shown in FIGS 1, 2A and 2B, a sensor 110 according to the embodiment includes an element section 10E and a controller 70.

As shown in FIGS. 2A and 2B, the element section 10E includes a base 10s, a fixed portion 10F and a movable portion 10M. As shown in FIG. 2B, the base 10s includes a base face 10f. The fixed portion 10F is fixed to the base face 10f. The base face 10f may be the upper face of the base 10s.

The movable portion 10M is supported by the fixed portion 10F. A gap G1 is provided between the base face 10f and the movable portion 10M.

A direction perpendicular to the base face 10f is defined as a Z-axis direction. One direction perpendicular to the Z-axis direction is defined as an X-axis direction. A direction perpendicular to the Z-axis and X-axis directions is defined as a Y-axis direction. The base face 10f is along the X-Y plane.

The element section 10E includes a first driving electrode 31, a second driving electrode 32, a first electrode 51, a second electrode 52, a third electrode 53, and a fourth electrode 54. The first driving electrode 31 is fixed to the base face 10f and faces the movable portion 10M. The second driving electrode 32 is fixed to the base face 10f and faces the movable portion 10M. The first electrode 51 is fixed to the base face 10f and faces the movable portion 10M. The second electrode 52 is fixed to the base face 10f and faces the movable portion 10M. The third electrode 53 is fixed to the base face 10f and faces the movable portion 10M. The fourth electrode 54 is fixed to the base face 10f and faces the movable portion 10M.

In this example, the movable portion 10M includes an annular portion 10n. The annular portion 10n is located around the fixed portion 10F along the base face 10f. The first driving electrode 31, the second driving electrode 32, the first electrode 51, the second electrode 52, the third electrode 53, and the fourth electrode 54 face the annular portion 10n. In this example, the movable portion 10M includes a plurality of annular portions 10n. The plurality of annular portions 10n are concentric with the fixed portion 10F.

For example, the fixed portion 10F includes a fixed portion center 10c on the base face 10f. The movable portion 10M includes a radial portion 10x. The radial portion 10x extends along a radial direction. The radial direction passes through the fixed portion center 10c and is along the base face 10f. The plurality of annular portions 10n are connected to each other by the radial portion 10x.

In this example, the first driving electrode 31 faces a part of the annular portion 10n of the movable portion 10M. The second driving electrode 32 faces another part of the annular portion 10n. The first electrode 51 faces another part of the annular portion 10n. The second electrode 52 faces another part of the annular portion 10n. The third electrode 53 faces another part of the annular portion 10n. The fourth electrode 54 faces another part of the annular portion 10n.

A first driving direction Dd1 from the fixed portion 10F (e.g., the fixed portion center 10c) to the first driving electrode 31 is along the base face 10f (see FIG. 2A). A second driving direction Dd2 from the fixed portion 10F (e.g., the fixed portion center 10c) to the second driving electrode 32 is along the base face 10f and crosses the first driving direction Dd1.

A first electrode direction De1 from the fixed portion 10F (e.g., fixed portion center 10c) to the first electrode 51 is along the base face 10f. A second electrode direction De2 from the fixed portion 10F (e.g., fixed portion center 10c) to the second electrode 52 is along the base face 10f and crosses the first electrode direction De1. A third electrode direction De3 from the fixed portion 10F (e.g., fixed portion center 10c) to the third electrode 53 is along the base face 10f and crosses the first electrode direction De1. A fourth electrode direction De4 from the fixed portion 10F (e.g., fixed portion center 10c) to the fourth electrode 54 is along the base face 10f and crosses the first electrode direction De1 and the third electrode direction De3.

In this example, the element section 10E further includes a first opposing electrode 41 and a second opposing electrode 42. The first opposing electrode 41 is fixed to the base face 10f and faces the movable portion 10M. The second opposing electrode 42 is fixed to the base face 10f and faces the movable portion 10M. For example, the first opposing electrode 41 faces another part of the annular portion 10n. The second opposing electrode 42 faces another part of the annular portion 10n.

A first opposing direction Ds1 from the fixed portion 10F (e.g., the fixed portion center 10c) to the first opposing electrode 41 is along the base face 10f. A second opposing direction Ds2 from the fixed portion 10F (e.g., the fixed portion center 10c) to the second opposing electrode 42 is along the base face 10f and crosses the first opposing direction Ds1.

The direction in which each of the plurality of electrodes described above faces the movable portion 10M is along the radial direction passing through the fixed portion center 10c.

As shown in FIG. 1, the controller 70 is electrically connected to the plurality of electrodes described above. In one example, the controller 70 may include a drive circuit 71, a detection circuit 72, and a control circuit 73.

The drive circuit 71 is configured to apply a first drive voltage Vd1 between the first driving electrode 31 and the movable portion 10M. The drive circuit 71 is configured to apply a second drive voltage Vd2 between the second driving electrode 32 and the movable portion 10M. These drive voltages are, for example, AC. By applying these drive voltages, the movable portion 10M vibrates. The direction of vibration is along the base face 10f.

The detection circuit 72 is configured to detect, for example, a first signal Vs1 between the movable portion 10M and the first opposing electrode 41. The detection circuit 72 is configured to detect, for example, a second signal Vs2 between the movable portion 10M and the second opposing electrode 42. By detecting these signals, the vibration state (for example, the vibration direction) of the movable portion 10M is detected.

For example, in a case where the movable portion 10M vibrates due to the above drive voltage, when an external force is applied to the element section 10E, the vibration state changes. For example, the vibration direction when the external force is applied changes from the vibration direction when no external force is applied. This change is thought to be based on, for example, Coriolis force. By detecting the change As1 in the vibration direction, for example, the angular velocity of the external force is detected. The control circuit 73 is configured to output a detection signal Sig0 based on the change As1 in the vibration direction. The detection signal Sig0 includes information regarding the angular velocity of the external force. The sensor 110 is, for example, an angular velocity sensor.

The first opposing electrode 41 and the second opposing electrode 42 may function as detection electrodes, for example.

As described above, the element section 10E includes the first electrode 51, the second electrode 52, the third electrode 53, and the fourth electrode 54. These electrodes may function, for example, as electrodes for adjusting the vibration characteristics of the movable portion 10M. These electrodes may function, for example, as electrodes for calibrating the vibration characteristics of the movable portion 10M.

The controller 70 may be configured to perform the following first operation and detection operation. The first operation includes a vibration operation and a voltage setting operation.

In the vibration operation, the controller 70 applies a first drive voltage Vd1 between the movable portion 10M and the first driving electrode 31, and applies a second drive voltage Vd2 between the movable portion 10M and the second driving electrode 32, causing the movable portion 10M to vibrate along the base face 10f. In this vibration operation, the controller 70 is configured to discretely change at least one of the first drive voltage Vd1 or the second drive voltage Vd2.

By discretely changing at least one of the first drive voltage Vd1 or the second drive voltage Vd2, the vibration angle θ between the vibration direction Dx (see FIG. 2A) of the movable portion 10M and a reference direction along the base face 10f changes discretely. The reference direction is arbitrary and may be, for example, the X-axis direction.

In the voltage setting operation, the controller 70 is configured to change at least one of the first voltage Vp1 between the movable portion 10M and the first electrode 51, the second voltage Vp2 between the movable portion 10M and the second electrode 52, the third voltage Vp3 between the movable portion 10M and the third electrode 53, or the fourth voltage Vp4 between the movable portion 10M and the fourth electrode 54, based on the vibration state (e.g., vibration direction Dx) of the movable portion 10M in the vibration operation. These voltages may correspond to bias voltages, for example. The voltage setting operation corresponds to a bias voltage setting operation.

The bias voltage is appropriately set by such vibration operation and voltage setting operation. The first operation corresponds to, for example, a calibration operation.

In the detection operation, the controller 70 is configured to detect the external force applied to the element section 10E using the first voltage Vp1, second voltage Vp2, third voltage Vp3, and fourth voltage Vp4 set in the voltage setting operation.

By combining and performing such a first operation (calibration operation) and detection operation, detection with higher accuracy becomes possible. According to the embodiment, a sensor capable of improving detection accuracy can be provided.

For example, the vibration characteristics of the movable portion 10M may become non-uniform due to non-uniformity in the manufacturing. For example, the vibration characteristics of the movable portion 10M may become asymmetric in directions within the X-Y plane. Such asymmetry is corrected by the first operation.

In the first operation, the voltage setting operation includes, for example, changing at least one of the first voltage Vp1, the second voltage Vp2, the third voltage Vp3, or the fourth voltage Vp4 so as to reduce the asymmetry of the vibration state of the movable portion 10M in the vibration operation.

For example, the movable portion 10M has a first resonant frequency in the first direction D1 and a second resonant frequency in the second direction D2 (see FIG. 2). The first direction D1 is a direction along the base face 10f. The second direction D2 is along the base face 10f and crosses the first direction D1. The second direction D2 may be perpendicular to the first direction D1. For example, due to non-uniformity in manufacturing, these resonant frequencies may not match. In the embodiment, at least one of the first voltage Vp1, the second voltage Vp2, the third voltage Vp3, or the fourth voltage Vp4 is changed so that the difference between the first resonant frequency and the second resonant frequency becomes small.

As described above, in the embodiment, at least one of the first drive voltage Vd1 or the second drive voltage Vd2 is changed discretely. The vibration angle θ of the vibration direction Dx of the movable portion 10M changes discretely. As a result, in one period, the movable portion 10M vibrates at one vibration angle θ, so that the voltage for calibration can be derived more accurately in one period.

For example, in a reference example in which the drive voltage is changed continuously, the vibration angle θ changes continuously over time. In this case, the vibration angle θ changes constantly. This makes it difficult to accurately derive the voltage for calibration.

In the embodiment, at least one of the first drive voltage Vd1 or the second drive voltage Vd2 is changed discretely. In one period, the voltage for calibration can be derived more accurately.

At least one of the first voltage Vp1, the second voltage Vp2, the third voltage Vp3, or the fourth voltage Vp4 may be 0. The voltage setting operation may include setting the voltage to 0 volts. Changing at least one of the first voltage Vp1, the second voltage Vp2, the third voltage Vp3, or the fourth voltage Vp4 may include setting at least one of the first voltage Vp1, the second voltage Vp2, the third voltage Vp3, or the fourth voltage Vp4 to 0 volts.

As already explained, the vibration state of the movable portion 10M is derived according to the detection results of the first signal Vs1 between the movable portion 10M and the first opposing electrode 41, and the second signal Vs2 between the movable portion 10M and the second opposing electrode 42.

The controller 70 may be configured to repeatedly perform a set including the first operation (calibration operation) and the detection operation. For example, the first operation may be performed before each of the plurality of detection operations using the sensor 110. Highly accurate detection results can be obtained. In the embodiment, the controller 70 may be configured to perform the first operation when the power supply of the controller 70 is turned on.

As described above, the detection operation includes vibrating the movable portion 10M along the base face 10f, detecting the change in the vibration state of the movable portion 10M caused by the external force, and detecting the angular velocity of the external force. By performing the above-mentioned first operation before such a detection operation, a highly accurate detection operation can be performed.

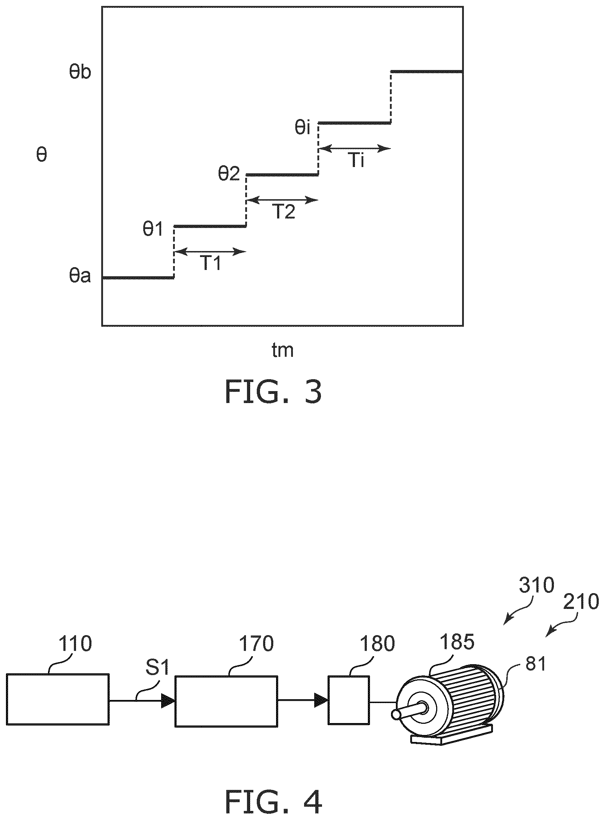

FIG. 3 is a schematic diagram illustrating the operation of the sensor in the first embodiment.

FIG. 3 illustrates the vibration operation of the first operation. The horizontal axis of FIG. 3 is time *tm.* The vertical axis of FIG. 3 is the vibration angle θ of the movable portion 10M.

As shown in FIG. 3, in the first period T1, the "vibration angle θ" of the vibration of the movable portion 10M is a first vibration angle θ1. In the second period T2, the "vibration angle θ" of the vibration of the movable portion 10M is a second vibration angle θ2. In the i-th period Ti, the "vibration angle θ" of the vibration of the movable portion 10M is the *i*-th vibration angle θi. "*i*" is an integer greater than or equal to 1.

The controller 70 sets at least one of the first drive voltage Vd1 or the second drive voltage Vd2 so that vibration of the *i*-th vibration angle θi is obtained during the *i*-th period Ti.

Thus, during the first period T1 in the vibration operation, the vibration angle θ between the vibration direction of the movable portion 10M and the reference direction along the base face 10f is the first vibration angle θ1. During the second period T2 in the vibration operation, the vibration angle θ is the second vibration angle θ2.

As shown in FIG. 3, the vibration angle θ is changed discretely between the minimum angle θa and the maximum angle θb. In the voltage setting operation, the controller 70 is configured to change at least one of the first voltage Vp1, the second voltage Vp2, the third voltage Vp3, or the fourth voltage Vp4 so that the absolute value of the difference between the first resonant frequency and the second resonant frequency becomes small, based on the vibration state of the movable portion 10M when the vibration angle θ changes discretely between the minimum angle θa and the maximum angle θb in the vibration operation.

For example, the above change of at least one of the first voltage Vp1, the second voltage Vp2, the third voltage Vp3, or the fourth voltage Vp4 may be performed by curve fitting the characteristics of the vibration state of the movable portion 10M when the vibration angle θ changes discretely.

For example, the absolute value of the difference between the first resonant frequency and second resonant frequency after the first operation (calibration operation) is smaller than the absolute value of the difference between the first resonant frequency and second resonant frequency before the first operation (calibration operation).

The difference between the minimum angle θa and the maximum angle θb corresponds to the amount of change (variation range) of the vibration angle θ. In the embodiment, in the vibration operation, it is preferable that the amount of change in the vibration angle is 90 degrees or more. By a large amount of change in the vibration angle, the vibration characteristics of the movable portion 10M is obtained more accurately. A more accurate calibration is possible.

In the vibration operation, the amount of change in the vibration angle θ may be 170 degrees or more. In the vibration operation, the amount of change in the vibration angle θ may be 175 degrees or more and 180 degrees or less.

In the vibration operation, it is preferable that the number of changes in the vibration angle θ is 8 or more. More accurate calibration can be performed. In the vibration operation, the number of changes in the vibration angle θ may be 12 or more.

As shown in FIG. 3, the vibration operation may include discretely increasing the vibration angle θ over time *tm.* In the embodiment, the vibration operation may include discretely increasing or decreasing the vibration angle θ over time *tm.*

The i-th period Ti may be, for example, not less than 1 ms and not more than 60 s. The first period T1 may be, for example, not less than 1 ms and not more than 60 s. The second period T2 may be, for example, not less than 1 ms and not more than 60 s.

In the embodiment, the second driving direction Dd2 may be substantially perpendicular to the first driving direction Dd1. The fixed portion 10F (e.g., the fixed portion center 10c) may be present between the first opposing electrode 41 and the first driving electrode 31. The fixed portion 10F (e.g., the fixed portion center 10c) may be present between the second opposing electrode 42 and the second driving electrode 32. The first electrode direction De1 may be inclined with respect to the first driving direction Dd1. The second electrode direction De2 may be inclined with respect to the first electrode direction De1. The third electrode direction De3 may be substantially perpendicular to the first electrode direction De1. The fourth electrode direction De4 may be substantially perpendicular to the third electrode direction De3.

### (Second Embodiment)

The second embodiment relates to an electronic device.

FIG. 4 is a schematic diagram illustrating an electronic device according to the second embodiment.

As shown in FIG. 4, an electronic device 310 according to the embodiment includes a sensor according to the first embodiment (e.g., sensor 110) and a circuit controller 170. The circuit controller 170 can control a circuit 180 based on a signal S1 obtained from the sensor. The circuit 180 is, for example, a control circuit for a drive device 185. According to the embodiment, for example, the circuit 180 for controlling the drive device 185 can be controlled with high accuracy.

As shown in FIG. 4, a sensor system 210 according to the embodiment includes a sensor according to the first embodiment (e.g., sensor 110) and a detection target member 81. The sensor 110 is fixed to the detection target member 81. The sensor 110 can detect a signal from the detection target member 81.

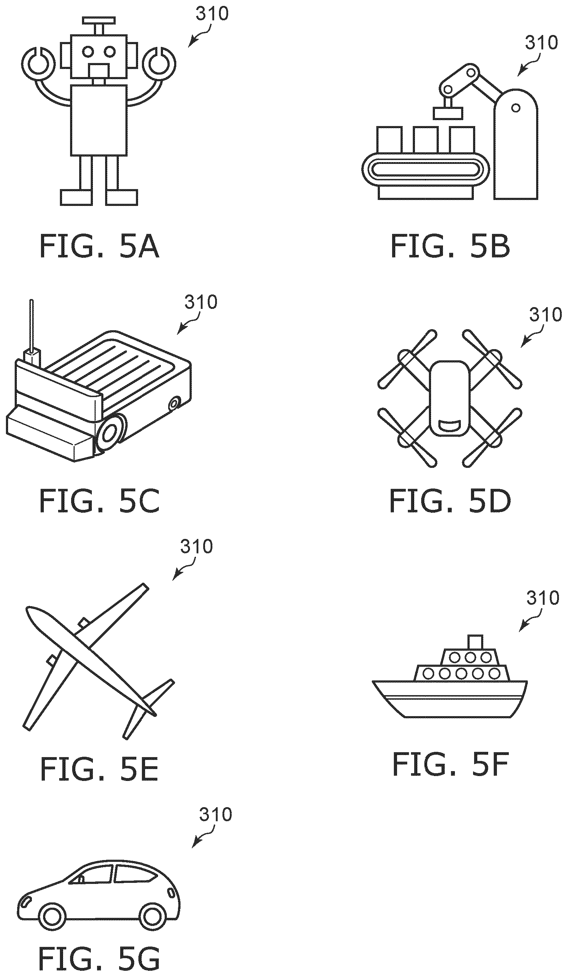

FIGS. 5A to 5G are schematic diagrams illustrating applications of the electronic device according to the embodiment.

As shown in FIG. 5A, the electronic device 310 may be at least a part of a robot. As shown in FIG. 5B, the electronic device 310 may be at least a part of a work robot provided in a manufacturing factory or the like. As shown in FIG. 5C, the electronic device 310 may be at least a part of an automated guided vehicle such as in a factory. As shown in FIG. 5D, the electronic device 310 may be at least a part of a drone (unmanned aerial vehicle). As shown in FIG. 5E, the electronic device 310 may be at least a part of an airplane. As shown in FIG. 5F, the electronic device 310 may be at least a part of a vessel. As shown in FIG. 5G, the electronic device 310 may be at least a part of an automobile. The electronic device 310 may include, for example, at least one of a robot or a mobile object.

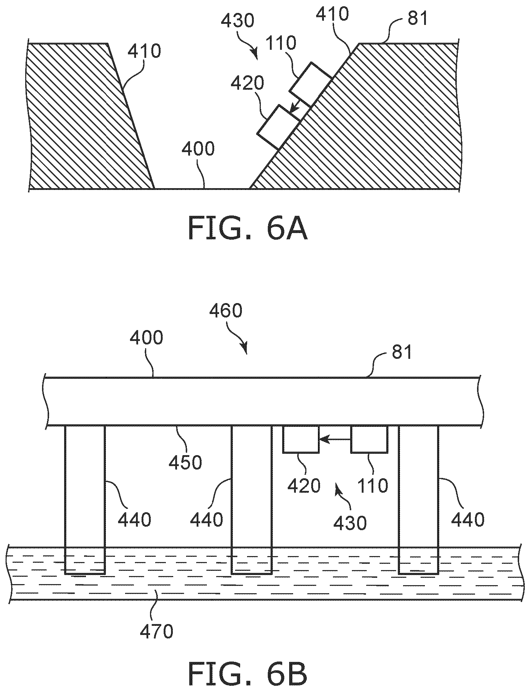

FIGS. 6A and 6B are schematic diagrams illustrating applications of the sensor according to the embodiment.

As shown in FIG. 6A, a sensor 430 according to the embodiment includes the sensor according to the first embodiment and a transmitter/receiver 420. In the example of FIG. 6A, the sensor 110 is drawn as the sensor. The transmitter/receiver 420 is configured to transmit the signal obtained from the sensor 110 by at least one of wireless or wired methods, for example. The sensor 430 is provided, for example, on a slope surface 410 such as a road 400. The sensor 430 may, for example, monitor conditions such as facilities (e.g., infrastructure). The sensor 430 may be, for example, a condition monitoring device.

For example, the sensor 430 detects changes in the state of the slope surface 410 of the road 400 with high accuracy. A change in the state of the slope surface 410 includes, for example, at least one of a change in tilt angle or a change in vibration state. The signal (test result) obtained from the sensor 110 is transmitted by the transmitter/receiver 420. The condition of facilities (e.g., infrastructure) can be monitored, e.g., continuously.

As shown in FIG. 6B, the sensor 430 is provided on a part of a bridge 460, for example. The bridge 460 is provided over a river 470. For example, the bridge 460 includes at least one of main girder 450 and a bridge pier 440. The sensor 430 is provided on at least one of the main girder 450 and the bridge pier 440. For example, the angle of at least one of the main girder 450 and the bridge pier 440 may change due to deterioration or the like. For example, in at least one of the main girder 450 and the bridge pier 440, the vibration state may change. The sensor 430 detects these changes with high accuracy. A detection result can be transmitted to an arbitrary place by the transmitter/receiver 420. Anomalies can be effectively detected.

The embodiment may include the following Technical proposals:

### (Technical proposal 1)

A sensor, comprising:
An element section; and
a controller,
the element section including:
   a base including a base face;
   a fixed portion fixed to the base face;
   a movable portion supported by the fixed portion, a gap being provided between the base face and the movable portion;
   a first driving electrode fixed to the base face and facing the movable portion;
   a second driving electrode fixed to the base face and facing the movable portion;
   a first electrode fixed to the base face and facing the movable portion;
   a second electrode fixed to the base face and facing the movable portion;
   a third electrode fixed to the base face and facing the movable portion; and
   a fourth electrode fixed to the base face and facing the movable portion,
a first driving direction from the fixed portion to the first driving electrode being along the base face,
a second driving direction from the fixed portion to the second driving electrode being along the base face and crossing the first driving direction,
a first electrode direction from the fixed portion to the first electrode being along the base face,
a second electrode direction from the fixed portion to the second electrode being along the base face and crossing the first electrode direction,
a third electrode direction from the fixed portion to the third electrode being along the base face and crossing the first electrode direction,
a fourth electrode direction from the fixed portion to the fourth electrode being along the base face and crossing the first electrode direction and the third electrode direction,
the controller being configured to perform a first operation and a detection operation,
the first operation including a vibration operation and a voltage setting operation,
in the vibration operation, the controller being configured to apply a first drive voltage between the movable portion and the first driving electrode and to apply a second drive voltage between the movable portion and the second driving electrode to vibrate the movable portion along the base face, and to discretely change at least one of the first drive voltage or the second drive voltage,
in the voltage setting operation, the controller being configured to change at least one of a first voltage between the movable portion and the first electrode, a second voltage between the movable portion and the second electrode, a third voltage between the movable portion and the third electrode, or a fourth voltage between the movable portion and the fourth electrode based on a vibration state of the movable portion in the vibration operation, and
in the detection operation, the controller being configured to detect an external force applied to the element section using the first voltage, the second voltage, the third voltage, and the fourth voltage set in the voltage setting operation.

### (Technical proposal 2)

The sensor according to Technical proposal 1, wherein
the detection operation includes vibrating the movable portion along the base face and detecting a change in the vibration state of the movable portion caused by the external force to detect an angular velocity of the external force.

### (Technical proposal 3)

The sensor according to Technical proposal 2, wherein
the element section includes
   a first opposing electrode fixed to the base face and facing the movable portion, and
   a second opposing electrode fixed to the base face and facing the movable portion,
a first opposing direction from the fixed portion to the first opposing electrode is along the base face,
a second opposing direction from the fixed portion to the second opposing electrode is along the base face and crosses the first opposing direction, and
the vibration state of the movable portion is derived according to a detection results of a first signal between the movable portion and the first opposing electrode and a second signal between the movable portion and the second opposing electrode.

### (Technical proposal 4)

The sensor according to any one of Technical proposals 1-3, wherein
the voltage setting operation includes changing at least one of the first voltage, the second electrode, the third voltage, or the fourth voltage so as to reduce an asymmetry of the vibration state of the movable portion in the vibration operation.

### (Technical proposal 5)

The sensor according to any one of Technical proposals 1-3, wherein
a vibration angle between a vibration direction of the movable portion and a reference direction along the base face changes discretely by discretely changing at least one of the first drive voltage or the second drive voltage in the vibration operation.

### (Technical proposal 6)

The sensor according to Technical proposal 5, wherein
the movable portion has a first resonance frequency in a first direction along the base face and a second resonance frequency in a second direction along the base face, and the second direction crosses the first direction, and
the controller is configured to change at least one of the first voltage, the second voltage, the third voltage, or the fourth voltage in the voltage setting operation so that an absolute value of a difference between the first resonance frequency and the second resonance frequency becomes small based on the vibration state of the movable portion when the vibration angle changes discretely in the vibration operation.

### (Technical proposal 7)

The sensor according to Technical proposal 5 or 6, wherein
the vibration operation includes increasing or decreasing the vibration angle over time discretely.

### (Technical proposal 8)

The sensor according to any one of Technical proposals 5-7, wherein
an amount of a change in the vibration angle in the vibration operation is 90 degrees or more.

### (Technical proposal 9)

The sensor according to any one of Technical proposals 5-7, wherein
an amount of a change in the vibration angle in the vibration operation is 170 degrees or more.

### (Technical proposal 10)

The sensor according to any one of Technical proposals 5-7, wherein
an amount of a change in the vibration angle in the vibration operation is not less than 175 degrees and not more 180 degrees.

### (Technical proposal 11)

The sensor according to any one of Technical proposals 5-7, wherein
a number of changes in the vibration angle in the vibration operation is 8 or more.

### (Technical proposal 12)

The sensor according to any one of Technical proposals 5-7, wherein
a number of changes in the vibration angle in the vibration operation is 12 or more.

### (Technical proposal 13)

The sensor according to any one of Technical proposals 5-12, where
during a first period in the vibration operation, the vibration angle is a first vibration angle, and
during a second period in the vibration operation, the vibration angle is a second vibration angle.

### (Technical proposal 14)

The sensor according to Technical proposal 13, where
the first period is not less than 10 ms and not more than 60 s.

### (Technical proposal 15)

The sensor according to any one of Technical proposals 1-14, wherein
the controller is configured to repeatedly perform a set including the first operation and the detection operation.

### (Technical proposal 16)

The sensor according to any one of Technical proposals 1 to 15, wherein
the controller is configured to perform the first operation when power supply of the controller is turned on.

### (Technical proposal 17)

The sensor according to any one of Technical proposals 1-16, wherein
the movable portion includes an annular portion,
the annular portion is located around the fixed portion along the base face, and
the first driving electrode, the second driving electrode, the first electrode, the second electrode, the third electrode, and the fourth electrode face the annular portion.

### (Technical proposal 18)

The sensor according to Technical proposal 17, wherein
the movable portion includes a plurality of the annular portions, and
the plurality of the annular portions are concentric with the fixed portion as a center.

### (Technical proposal 19)

The sensor according to Technical proposal 18, wherein
the fixed portion includes a fixed portion center on the base face,
the movable portion includes a radial portion,
the radial portion extends along a radial direction,
the radial direction passes through the fixed portion center and along the base face, and
the plurality of annular portion are connected to each other by the radial portion.

### (Technical proposal 20)

An electronic device comprising:
the sensor according to any one of Technical proposals 1-19; and
a circuit controller configures to control a circuit based on a signal obtained from the sensor.

According to the embodiment, a sensor and electronic device can be provided that can improve detection accuracy.

Hereinabove, exemplary embodiments of the invention are described with reference to specific examples. However, the embodiments of the invention are not limited to these specific examples. For example, one skilled in the art may similarly practice the invention by appropriately selecting specific configurations of components included in sensors such as element sections, bases, fixed portions, movable portion, fixed electrode, controllers, etc., from known art. Such practice is included in the scope of the invention to the extent that similar effects thereto are obtained.

Further, any two or more components of the specific examples may be combined within the extent of technical feasibility and are included in the scope of the invention to the extent that the purport of the invention is included.

Moreover, all sensors and all electronic devices practicable by an appropriate design modification by one skilled in the art based on the sensors and the electronic devices described above as embodiments of the invention also are within the scope of the invention to the extent that the purport of the invention is included.

Various other variations and modifications can be conceived by those skilled in the art within the scope of the invention as defined by the appended claims, and it is understood that such variations and modifications are also encompassed within the scope of the invention as defined by the appended claims.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. A sensor, comprising:
An element section; and
a controller,
the element section including:
a base including a base face;
a fixed portion fixed to the base face;
a movable portion supported by the fixed portion, a gap being provided between the base face and the movable portion;
a first driving electrode fixed to the base face and facing the movable portion;
a second driving electrode fixed to the base face and facing the movable portion;
a first electrode fixed to the base face and facing the movable portion;
a second electrode fixed to the base face and facing the movable portion;
a third electrode fixed to the base face and facing the movable portion; and
a fourth electrode fixed to the base face and facing the movable portion,
a first driving direction from the fixed portion to the first driving electrode being along the base face,
a second driving direction from the fixed portion to the second driving electrode being along the base face and crossing the first driving direction,
a first electrode direction from the fixed portion to the first electrode being along the base face,
a second electrode direction from the fixed portion to the second electrode being along the base face and crossing the first electrode direction,
a third electrode direction from the fixed portion to the third electrode being along the base face and crossing the first electrode direction,
a fourth electrode direction from the fixed portion to the fourth electrode being along the base face and crossing the first electrode direction and the third electrode direction,
the controller being configured to perform a first operation and a detection operation,
the first operation including a vibration operation and a voltage setting operation,
in the vibration operation, the controller being configured to apply a first drive voltage between the movable portion and the first driving electrode and to apply a second drive voltage between the movable portion and the second driving electrode to vibrate the movable portion along the base face, and to discretely change at least one of the first drive voltage or the second drive voltage,
in the voltage setting operation, the controller being configured to change at least one of a first voltage between the movable portion and the first electrode, a second voltage between the movable portion and the second electrode, a third voltage between the movable portion and the third electrode, or a fourth voltage between the movable portion and the fourth electrode based on a vibration state of the movable portion in the vibration operation, and
in the detection operation, the controller being configured to detect an external force applied to the element section using the first voltage, the second voltage, the third voltage, and the fourth voltage set in the voltage setting operation.

2. The sensor according to claim 1, wherein
the detection operation includes vibrating the movable portion along the base face and detecting a change in the vibration state of the movable portion caused by the external force to detect an angular velocity of the external force.

3. The sensor according to claim 2, wherein
the element section includes
a first opposing electrode fixed to the base face and facing the movable portion, and
a second opposing electrode fixed to the base face and facing the movable portion,
a first opposing direction from the fixed portion to the first opposing electrode is along the base face,
a second opposing direction from the fixed portion to the second opposing electrode is along the base face and crosses the first opposing direction, and
the vibration state of the movable portion is derived according to a detection results of a first signal between the movable portion and the first opposing electrode and a second signal between the movable portion and the second opposing electrode.

4. The sensor according to any one of claims 1-3, wherein
the voltage setting operation includes changing at least one of the first voltage, the second electrode, the third voltage, or the fourth voltage so as to reduce an asymmetry of the vibration state of the movable portion in the vibration operation.

5. The sensor according to any one of claims 1-3, wherein
a vibration angle between a vibration direction of the movable portion and a reference direction along the base face changes discretely by discretely changing at least one of the first drive voltage or the second drive voltage in the vibration operation.

6. The sensor according to claim 5, wherein
the movable portion has a first resonance frequency in a first direction along the base face and a second resonance frequency in a second direction along the base face, and the second direction crosses the first direction, and
the controller is configured to change at least one of the first voltage, the second voltage, the third voltage, or the fourth voltage in the voltage setting operation so that an absolute value of a difference between the first resonance frequency and the second resonance frequency becomes small based on the vibration state of the movable portion when the vibration angle changes discretely in the vibration operation.

7. The sensor according to claim 5 or 6, wherein
the vibration operation includes increasing or decreasing the vibration angle over time discretely.

8. The sensor according to any one of claims 5-7, wherein
an amount of a change in the vibration angle in the vibration operation is 90 degrees or more.

9. The sensor according to any one of claims 5-7, wherein
an amount of a change in the vibration angle in the vibration operation is 170 degrees or more.

10. The sensor according to any one of claims 5-7, wherein
an amount of a change in the vibration angle in the vibration operation is not less than 175 degrees and not more 180 degrees.

11. The sensor according to any one of claim 5-10, where
during a first period in the vibration operation, the vibration angle is a first vibration angle, and
during a second period in the vibration operation, the vibration angle is a second vibration angle.

12. The sensor according to any one of claims 1-11, wherein
the movable portion includes an annular portion,
the annular portion is located around the fixed portion along the base face, and
the first driving electrode, the second driving electrode, the first electrode, the second electrode, the third electrode, and the fourth electrode face the annular portion.

13. The sensor according to claim 12, wherein
the movable portion includes a plurality of the annular portions, and
the plurality of the annular portions are concentric with the fixed portion as a center.

14. The sensor according to claim 13, wherein
the fixed portion includes a fixed portion center on the base face,
the movable portion includes a radial portion,
the radial portion extends along a radial direction,
the radial direction passes through the fixed portion center and along the base face, and
the plurality of annular portion are connected to each other by the radial portion.

15. An electronic device comprising:
the sensor according to any one of claims 1-14; and
a circuit controller configures to control a circuit based on a signal obtained from the sensor.
